# EUROPÄISCHE PATENTSCHRIFT

(11) **EP 0 683 091 B1**
(45) Veröffentlichungstag und Bekanntmachung des Hinweises auf die Patenterteilung: **17.01.2001**
(21) Anmeldenummer: 95106987.1
(22) Anmeldetag: 09.05.1995
(51) Int. Cl.: B62H 5/18, E05B 67/36

(54) **Scheibenbremsenschloss**
Disc brake lock
Serrure pour frein à disque

(30) Priorität: 16.05.1994 DE 4417127
(43) Veröffentlichungstag der Anmeldung: 22.11.1995
(73) Patentinhaber: Aug. Winkhaus GmbH & Co. KG, D-48291 Telgte (DE)
(72) Erfinder: Kortenbrede, Ludger, D-48291 Telgte (DE)
(74) Vertreter: Prechtel, Jörg, Dipl.-Phys. Dr.

(56) Entgegenhaltungen:
- EP-A- 0 561 646
- EP-A- 0 616 102
- DE-U- 9 210 554
- FR-A- 949 650
- FR-A- 2 702 728

## Beschreibung

Die vorliegende Erfindung betrifft ein Scheibenbremsenschloß, insbesondere zum Sperren einer Scheibenbremse eines Kraftrads, gemäß dem Oberbegriff des Anspruchs 1.

Aus dem deutschen Gebrauchsmuster DE-U-92 10 554 ist ein Scheibenbremsenschloß bekannt, bei dem der Schloßkörper aus einem Metallblock besteht, in welchen zum Einführen der Scheibenbremse ein Einschnitt vorgesehen ist. Ein im Bereich von einem der so gebildeten Endstege gelagerter, durch die dortige Schließvorrichtung betätigbarer Sperrbolzen kann zum Sperren der Scheibenbremse aus der axialen Freigabestellung, in welcher der Sperrbolzen zurückgezogen ist und der Einschnitt zum Einführen der Scheibenbremse freigegeben ist, in die axiale Sperrstellung gebracht werden, in welcher der Sperrbolzen eine Bohrung in der in den Einschnitt eingeschobenen Scheibenbremse durchsetzt und sich mit seinem freien, zylindrischen Ende in eine zylindrische Sperrbolzenaufnahmeöffnung am anderen Endsteg erstreckt. Dies führt zu dem Problem, daß zum unbefugten Lösen des Scheibenbremsenschlosses von der Bremsscheibe die beiden Endstege lediglich entsprechend weit auseinander zu biegen sind, bis der Sperrbolzen aus der Sperrbolzenaufnahmeöffnung heraustritt. Um dies auszuschließen, muß der Schloßkörper mechanisch besonders stabil, insbesondere aus einem massiven Metallkörper oder aus hochfestem Material, hergestellt sein, welches jedoch bei dem Massenprodukt Scheibenbremsenschloß aus Kostengründen im allgemeinen ausscheidet. Ein derart massiver Metallblock-Schloßkörper führt jedoch für den Hersteller derartiger Scheibenbremsenschlösser zu relativ hohen Herstellungskosten und für den Verwender des Scheibenbremsenschlosses zu dem Problem, daß dann, wenn das Scheibenbremsenschloß nicht zum Sperren der Scheibenbremse verwendet wird, ein relativ schwerer Gegenstand mitgeführt werden muß, welcher z. B. an einem Motorrad beim Fahren auch entsprechend gesichert werden muß.

Ein Schloß gemäß dem Oberbegriff des Anspruchs 1 ist aus der FR-A-949 650 bekannt. Dieses Dokument zeigt ein Schloß mit U-förmigem Schloßkörper. Im Bereich eines ersten U-Schenkels des Schloßkörpers ist eine Schließvorrichtung in Form eines schlüsselsperrbaren Schlosses angeordnet, welches mit einem Sperrstift verbunden ist. Am ersten und an einem zweiten der U-Schenkel sind jeweils Ausnehmungen vorgesehen, in welche in der Schließstellung ein jeweiliger Sperrdorn des Sperrstifts eingreift, so daß die beiden U-Schenkel miteinander verbunden sind. Der Schloßkörper ist durch Gießen, Stanzen oder dergleichen aus zwei Halbschalen gebildet oder ist aus einem gebogenen Teil gebildet, wobei die die Sperrdorne aufnehmenden Ausnehmungen bereits beim Bearbeitungsvorgang oder Herstellungsvorgang des Schloßkörpers in diesem vorgesehen werden.

Aus der EP 0 561 646 A1 ist ein Schloß bekannt, das ein am Boden befestigbares Plattenteil und zwei sich gegenüberliegende trapezförmige Schenkel aufweist, durch welche hindurch ein Sperrbolzen geführt werden kann.

Es ist die Aufgabe der vorliegenden Erfindung, ein Scheibenbremsenschloß vorzusehen, welches bei hoher Sicherheit in einfacher Weise mit beliebiger Größe hergestellt werden kann.

Erfindungsgemäß wird diese Aufgabe durch das im Anspruch 1 angegebene Scheibenbremsenschloß gelöst.

Beim erfindungsgemäßen Scheibenbremsenschloß ist also der Sperrbolzen in der Sperrverriegelungsdrehstellung, in welcher das Scheibenbremsenschloß z. B. an einer Scheibenbremse angebracht ist, sowohl am ersten Endsteg durch die Schließvorrichtung gesperrt, als auch gesondert am zweiten Endsteg durch die mit den Gegenverriegelungsmitteln in der Sperrbolzenaufnahmeöffnung zusammenwirkenden Verriegelungsmitteln am Sperrbolzen gesperrt bzw. verriegelt. Die beiden freien Enden der Endstege sind daher bezüglich einander festgelegt und können in der Sperrverriegelungsdrehstellung durch Gewalteinwirkung nicht ohne Zerstörung des Verriegelungs- und/oder Gegenverriegelungsmittel auseinandergezogen werden, um dadurch das Scheibenbremsenschloß von der Scheibenbremse zu entfernen. Dies ermöglicht die Verwendung eines deutlich leichter gebauten Schloßkörpers, als z. B. dem im Stand der Techik bekannten Metallblock, wodurch sowohl die Herstellungskosten für das erfindungsgemäße Scheibenbremsenschloß gesenkt werden können, als auch dessen Gewicht bei dennoch verbesserter Sicherheit deutlich verringert werden kann.

Dies wird im wesentlichen dadurch begünstigt, daß bei dem erfindungsgemäßen Scheibenbremsenschloß der Schloßkörper die zwei im wesentlichen parallel nebeneinander angeordneten Bügel aus gehärtetem Drahtmaterial mit jeweiligen Bügelschenkeln umfaßt, welche den ersten Endsteg und den zweiten Endsteg bilden. Dies führt bei sehr hoher Sicherheit ferner zu einem Scheibenbremsenschloß mit geringem Gewicht.

In einer bevorzugten Ausführungsform umfassen die Verriegelungsmittel wenigstens einen am Sperrbolzen im Bereich von dessen freiem Ende vorgesehenen, sich im wesentlichen quer zur Längsachse erstreckenden Vorsprung, und die Gegenverriegelungsmittel umfassen wenigstens eine dem wenigstens einen Vorsprung zugeordnete Eingriffsausnehmung, in welche der wenigstens eine Vorsprung am Sperrbolzen in der Sperrverriegelungsdrehstellung des Sperrbolzens eingreift. Ein derartiger seitlicher Vorsprung und die Ausnehmung können leicht hergestellt werden und bieten bei sehr einfachem Aufbau in der Sperrverriegelungsdrehstellung eine hohe Sicherheit gegen das Ausziehen des Sperrbolzens aus der Sperrbolzenaufnahmeöffnung ohne daß irgendwelche mechanisch bewegbaren Teile im Bereich der Sperrbolzenausnahmeöffnung vorgesehen sein müßten.

In besonders einfacher Weise sind die Gegenverriegelungsmittel herstellbar, wenn im Bereich des freien Endes des zweiten Endstegs eine Sperrbolzenaufnahme vorgesehen ist, in welcher die Sperrbolzenaufnahmeöffnung gebildet ist, und wenn die wenigstens eine Eingriffsausnehmung zwischen einem sich in der Sperrbolzenaufnahme im wesentlichen quer zur Längsachse erstreckenden und mit einem Abschnitt in die Sperrbolzenaufnahmeöffnung hineinreichenden Stift und einem Boden der Sperrbolzenaufnahmeöffnung gebildet ist.

Der Sperrbolzen am ersten Endsteg ist vorzugsweise um die Längsachse zwischen der Sperrverriegelungsdrehstellung und einer Sperrfreigabedrehstellung, in welcher der Vorsprung außer Eingriff mit der Eingriffsausnehmung ist, drehbar angeordnet und der Sperrbolzen ist in der Sperrverriegelungsdrehstellung durch die Schließvorrichtung gegen Drehbewegungen in die Sperrfreigabedrehstellung verriegelbar. Damit kann durch einfaches Drehen des Sperrbolzens um die Längsachse das freie Ende des Sperrbolzens in der Sperrbolzenaufnahmeöffnung verriegelt bzw. wieder freigegeben werden.

Um in der Sperrverriegelungsdrehstellung ein Angreifen an den Sperrbolzen von außen zu verhindern, wodurch dieser unter Umständen um die Längsachse gedreht und somit in die Sperrfreigabsetellung gebracht werden könnte, wird vorgeschlagen, daß der Sperrbolzen in einem mittleren Bereich von einer am Sperrbolzen um die Längsachse drehbar angeordneten Sicherungshülse umgeben ist, welche in der Sperrstellung des Sperrbolzens einen zwischen den freien Enden der beiden Endstege gebildeten Freiraum vollständig überbrückt. Wird nun versucht, z. B. mit einer Zange, direkt am Sperrbolzen im Bereich zwischen den freien Enden der Endstege anzugreifen, so wird lediglich die Sicherungshülse auf dem Sperrbolzen gedreht, der Sperrbolzen bleibt jedoch in seiner jeweiligen Drehstellung.

Vorzugsweise sind die den zweiten Endsteg bildendenden Bügelschenkel an ihren freien Enden über einen die Gegenverriegelungsmittel umgreifenden Ringabschnitt einstückig miteinander verbunden. Der Ringabschnitt verhindert dabei gleichzeitig, daß der Stift, der zusammen mit dem Boden der Sperrbolzenaufnahmeöffnung die Ausnehmung in der Sperrbolzenaufnahmeöffnung bildet, und welcher in eine Bohrung in die Sperrbolzenaufnahme eingeschoben ist, sich aus der Sperrbolzenaufnahme herausbewegen kann.

Die Schließvorrichtung kann einen im Bereich des freien Endes des ersten Endstegs vorgesehenen Schließzylinder mit einem Schließzylindergehäuse und einen im Schließzylindergehäuse um die Längsachse drehbaren Zylinderkern umfassen, wobei dann der Sperrbolzen mit seinem seinem freien entgegengesetzten Ende mit dem Zylinderkern zur gemeinsamen Drehung um die Längsachse fest gekoppelt ist.

Um in einfacher Weise die Verschiebung des Sperrbolzens entlang der Längsachse und gleichzeitig die Drehung des Sperrbolzens um die Längsachse zu ermöglichen, wird vorgeschlagen, daß das Schließzylindergehäuse eine in einem Schließzylinderaufnahmegehäuse am freien Ende des ersten Endstegs fest angebrachte äußere Schließzylindergehäusehülse umfaßt sowie eine in der äußeren Schließzylindergehäusehülse in Richtung der Längsachse verschiebbare und gegen Drehung um die Längsachse gesicherte innere Schließzylindergehäusehülse, und daß der Zylinderkern in der inneren Schließzylindergehäusehülse um die Längsachse drehbar und gegen Verschiebung entlang der Längsachse bezüglich der inneren Schließzylindergehäusehülse gesichert angeordnet ist.

Zum Sperren des Sperrbolzens in seiner axialen und gleichzeitig seiner Sperrverriegelungsdrehstellung gegen Axialverschiebung am ersten Endsteg wird vorgeschlagen, daß in einer Innenumfangsfläche der äußeren Schließzylindergehäusehülse wenigstens ein sich in Richtung der Längsachse erstreckender Führungsvorsprung vorgesehen ist, daß in einer Außenumfangsfläche der inneren Schließzylindergehäusehülse wenigstens eine sich in der Richtung der Längsachse erstreckende, dem wenigstens einem Führungsvorsprung zugeordnete Führungsnut vorgesehen ist, und daß in einem sich in Richtung der Längsachse an die innere Schließzylindergehäusehülse anschließenden Sperrabschnitt des Zylinderkerns wenigstens eine in der Sperrfreigabedrehstellung des Sperrbolzens mit der wenigstens einen Führungsnut in der inneren Schließzylindergehäusehülse axial fluchtende, sich in Richtung der Längsachse erstreckende Führungsnut vorgesehen ist.

Bei in die Aufnahmeöffnung eingeschobenem freien Ende des Sperrbolzens (= axiale Sperrstellung) wird zum Sperren des Schlosses der Zylinderkern, z. B. durch einen Schlüssel, um die Längsachse gedreht, wodurch der Vorsprung am Sperrbolzen in Eingriff mit der Eingriffsausnehmung gebracht wird und somit der Sperrbolzen in die Sperrverriegelungsdrehstellung gebracht wird. In dieser Darstellung ist die Führungsnut in der Außenumfangsfläche des Sperrabschnitts bezüglich der Führungsnut in der Außenumfangsfläche der inneren Schließzylindergehäusehülse und des Vorsprungs an der Innenumfangsfläche der äußeren Schließzylindergehäusehülse in Umfangsrichtung verdreht. Ein axiales Einschieben des Führungsvorsprungs in die Führungsnut am Sperrabschnitt des Zylinderkerns ist nicht mehr möglich. Somit ist der Zylinderkern mit dem Sperrbolzen im Schließzylindergehäuse gegen eine axiale Bewegung von der Sperrstellung in die Freigabestellung gesperrt.

Die Erfindung wird nachfolgend anhand bevorzugter Ausführungsformen mit Bezug auf die beiliegenden Zeichnungen detailliert beschrieben. Es zeigt:
- Fig. 1: eine perspektivische Seitenansicht des erfindungsgemäßen Scheibenbremsenschlosses in einer Sperrstellung;
- Fig. 2: eine perspektivische Seitenansicht des erfindungsgemäßen Scheibenbremsenschlosses in einer Freigabestellung;
- Fig. 3.: eine perspektivische Ansicht eines Schließzylinders des erfindungsgemäßen Scheibenbremsenschlosses mit einem mit dem Zylinderkern verbundenen Sperrbolzen;
- Fig. 4: einen Längsschnitt des in Fig. 1 dargestellten Scheibenbremsenschlosses in einer Ebene IV-IV in Fig. 1;
- Fig. 5: einen Querschnitt des erfindungsgemäßen Scheibenbremsenschlosses längs einer Linie V-V in Fig. 4; und
- Fig. 6: einen Querschnitt des erfindungsgemäßen Scheibenbremsenschlosses längs einer Linie vI-Vi in Fig. 4.

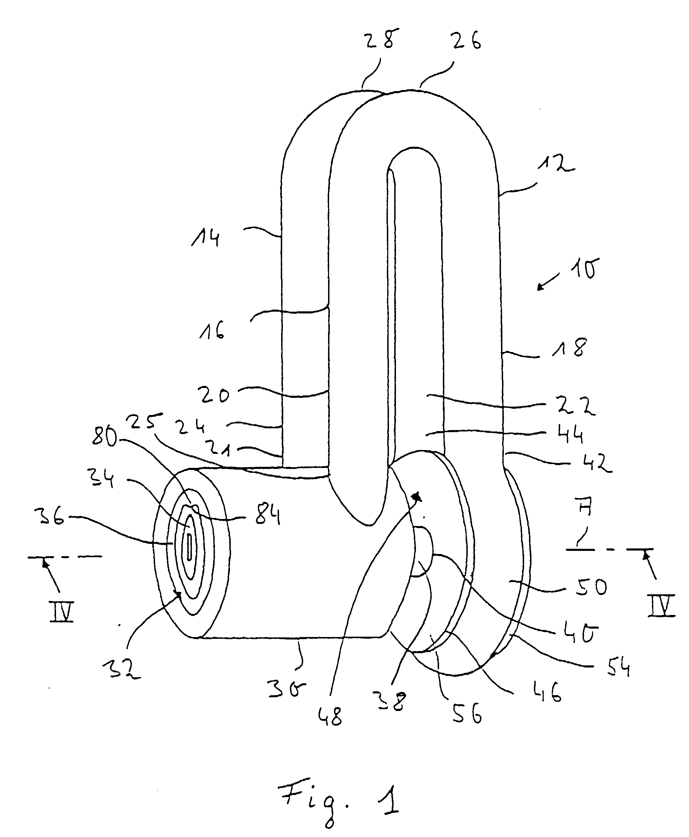

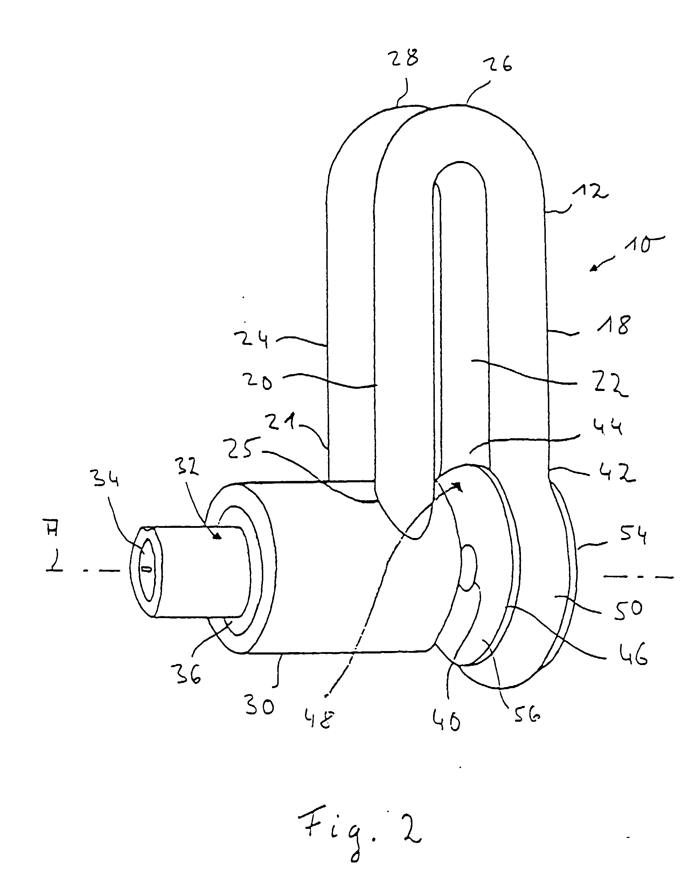

In den Fig. 1 und 2 ist ein mit 10 bezeichnetes Scheibenbremsenschloß in einer perspektivischen Seitenansicht dargestellt. Das Scheibenbremsenschloß 10 umfaßt einen im wesentlichen U-förmigen Schloßkörper 12, welcher durch zwei Bügel 14 und 16 gebildet ist. Die Bügel 14 und 16 weisen jeweils Endstege 18, 20 bzw. 22, 24 auf, die jeweils durch einen Verbindungssteg 26 bzw. 28 miteinander verbunden sind. Die Bügel 12, 14 sind aus einem gehärteten Drahtmaterial hergestellt, das z. B. durch Biegen in die in den Figuren dargestellte Form gebracht wird. Im Bereich der freien Enden 20, 24 der Endstege 14, 16 ist ein Schließzylinderaufnahmegehäuse 30 angeordnet, in welchem in einer Durchgangsöffnung 31 ein Schließzylinder 32 aufgenommen ist.

Ein Zylinderkern 34 ist in einem Schließzylindergehäuse 36 in Richtung einer Längsachse A verschiebbar und um die Längsachse A drehbar angeordnet und ist mit einem Sperrbolzen 38 fest verbunden. In der Darstellung der Fig. 1 ragt der Sperrbolzen 38 in eine Sperrbolzenaufnahmeöffnung 40, die in einer im Bereich von freien Enden 42, 44 der Endstege 18, 22 angeordneten Sperrbolzenaufnahme 46 vorgesehen ist. Das Scheibenbremsenschloß 10 ist in Fig. 1 in seiner axialen Sperrstellung dargestellt.

In Fig. 2 ist das Scheibenbremsenschloß 10 in einer axialen Freigabestellung dargestellt. Dabei ist der in Fig. 2 nicht erkennbare Sperrbolzen 38 aus der Sperrbolzenaufnahmeöffnung 40 in der Sperrbolzenaufnahme 46 zurückgezogen, so daß ein zwischen den Endstegen 18, 20, 22, 24 gebildeter Freiraum 48 zum Einschieben einer Scheibenbremsen-Bremsscheibe 11 freigegeben ist.

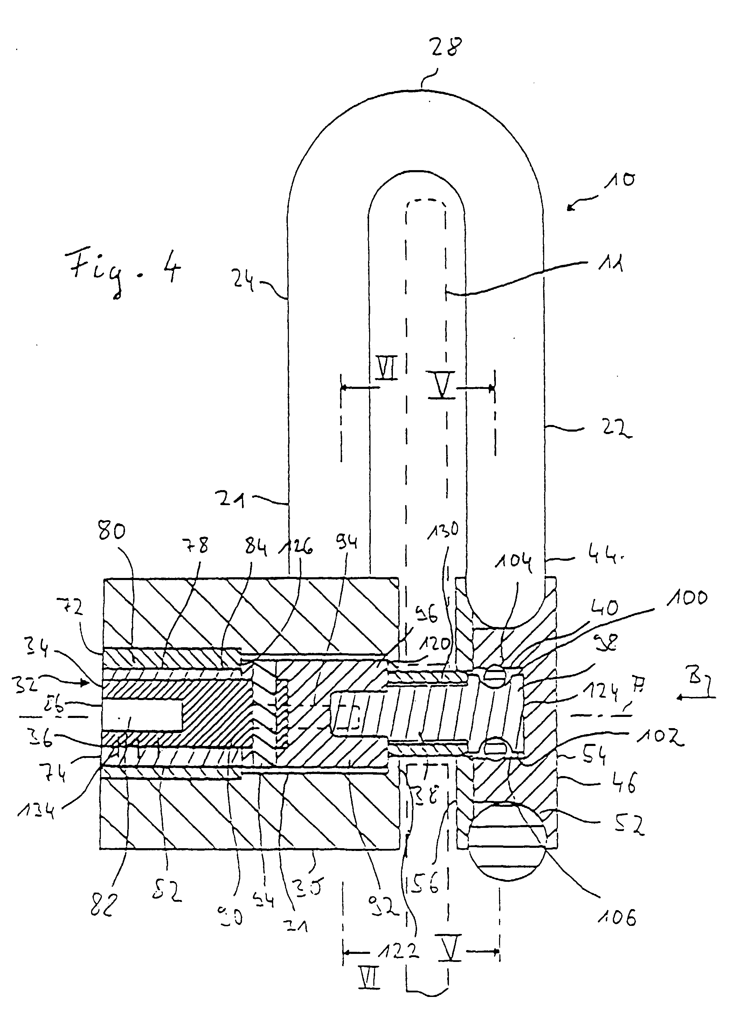

Wie in Fig. 2 insbesondere zu erkennen ist, ist in der Freigabestellung der Zylinderkern 34 in einer mit Bezug auf die Fig. 4 detaillierter beschriebenen Art und Weise in Richtung der Längsachse A aus dem Schließzylindergehäuse 36 ausgezogen und somit der Sperrbolzen 38 in das Schließzylinderaufnahmegehäuse 30 zurückgezogen.

Wie in den Figuren 1, 2, 4 und 5 zu erkennen ist, sind die Endstege 18, 22 im Bereich ihrer freien Enden 42, 44 durch einen kreisförmig gebogenen Bogenabschnitt 50 einteilig miteinander verbunden. In dem Bogenabschnitt 50 ist die im wesentlichen zylindrisch ausgebildete Sperrbolzenaufnahme 46 angeordnet, wobei der Bogenabschnitt 50 wenigstens teilweise in radialer Richtung in eine in der Sperrbolzenaufnahme 46 gebildete Umfangsvertiefung 52 ragt. Diese ist durch ein im Schnitt im wesentlichen T-förmiges Basisteil 54 und eine im wesentlichen kreisscheibenartige Deckplatte 56 der Sperrbolzenaufnahme 46 gebildet. Nach dem Einführen des Basisteils 54 in den Bogenabschnitt 50 kann die Deckplatte 56 z. B. durch Schrauben oder dergleichen am Basisteil 54 festgelegt und somit die Sperrbolzenaufnahme 46 im Bereich der freien Enden 42, 44 der Endstege 18, 22 festgelegt werden.

Wie insbesondere in den Figuren 1, 2 und 6 zu erkennen ist, sind die Endstege 20, 24 im Bereich ihrer freien Enden 25, 21 in seitliche Bohrungen 58, 62 des Schließzylinderaufnahmegehäuses 30 eingeführt, und durch in Längsbohrungen im Schließzylinderaufnahmegehäuse 30 eingesetzte und in Ausnehmungen 64, 66 an den freien Enden 25, 21 der Endstege 20, 24 eingreifende Stifte 68, 70 am Schließzylinderaufnahmegehäuse 30 festgelegt.

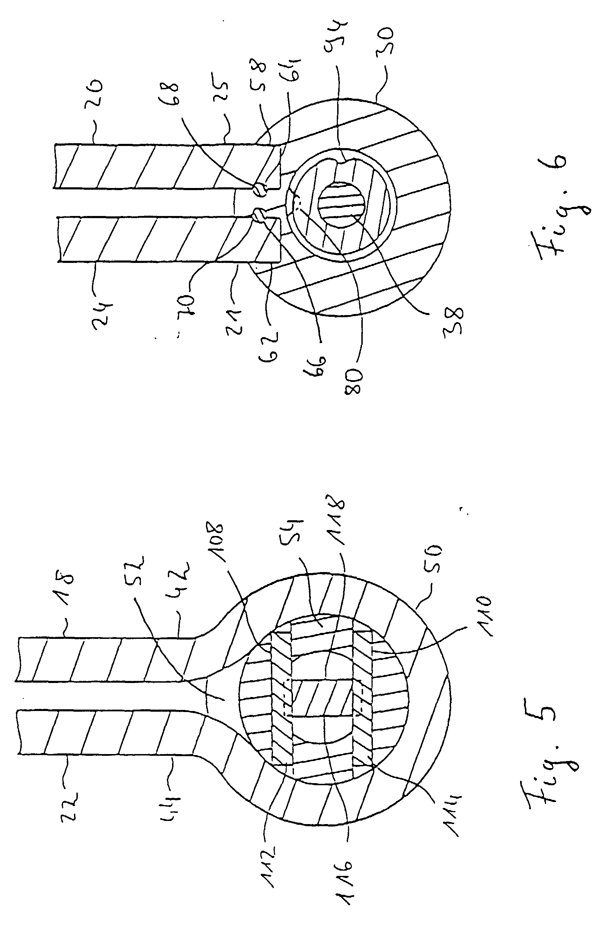

Obwohl in den Figuren nicht dargestellt, ist es ebenso möglich, die freien Enden 21, 25 der Endstege 20, 24 ebenso wie die Endstege 18, 22 durch einen Bogenabschnitt einteilig miteinander zu verbinden und in einer der in Fig. 5 dargestellten Art und Weise entsprechenden Weise am Schließzylinderaufnahmegehäuse 30 festzulegen. Ebenso können die Endstege 18, 22 in der Sperrbolzenaufnahme 46 durch Stifte in einer der in Fig. 6 dargestellten Art und Weise entsprechen Weise festgelegt werden.

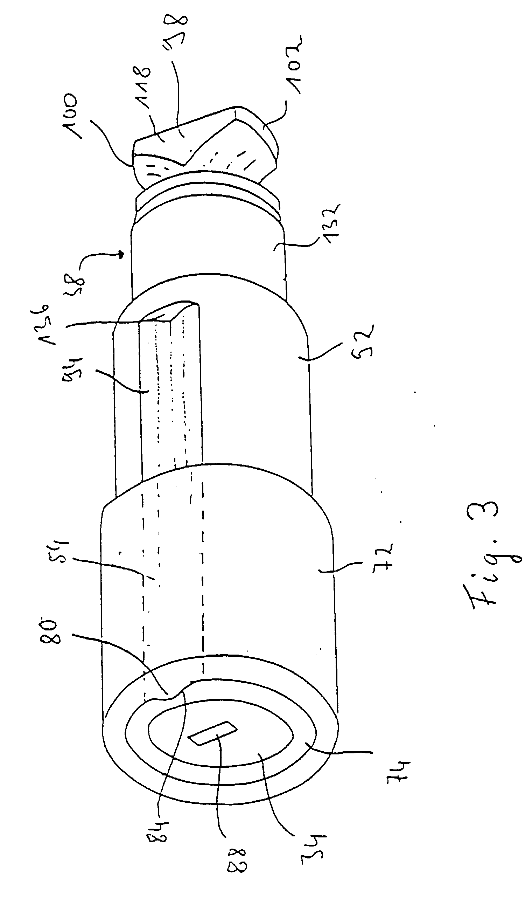

Wie in Fig. 4 detaillierter dargestellt, umfaßt der Schließzylinder 32 ein aus einer äußeren Schließzylindergehäusehülse 72 und aus einer inneren Schließzylindergehäusehülse 74 bestehendes Schließzylindergehäuse 36. Die innere Schließzylindergehäusehülse 74 ist innerhalb der äußeren Schließzylindergehäusehülse 72 in Richtung der Längsachse A zwischen der in Fig. 1 dargestellten Sperrstellung und der in Fig. 2 dargestellten Freigabestellung verschiebbar. An einer Innenumfangsfläche 78 der im Schließzylinderaufnahmegehäuse 30 festgelegten äußeren Schließzylindergehäusehülse 72 ist ein sich radial nach innen und in Richtung der Längsachse A erstreckender Führungsvorsprung 80 vorgesehen (siehe auch Fig. 1 und 3), welcher in einer an einer Außenumfangsfläche 82 der ommerem Schließzylindergehäusehülse 74 gebildete Führungsnut 84 eingreift (siehe auch Fig. 1 und 3) und somit die innere Schließzylindergehäusehülse 74 gegen Drehung um die Längsachse A innerhalb der äußeren Schließzylindergehäusehülse 72 sichert.

Innerhalb der inneren Schließzylindergehäusehülse 74 ist der Zylinderkern 34 um die Längsachse A drehbar jedoch gegen Verschiebungen in Richtung der Längsachse A bezüglich der inneren Schließzylindergehäusehülse 74 gesichert angeordnet. Der Zylinderkern 34 weist im Bereich seines vorderen Endes 86 einen Schlüsselkanal 88 auf und ist im Bereich seines hinteren Endes 90 mit einem Sperrabschnitt 92 durch einen Stift 94 drehfest verbunden.

Wie insbesondere in Fig. 3 zu erkennen ist, ist auch im Sperrabschnitt 92 eine Führungsnut 94 vorgesehen, welche in einer nachfolgend noch detailliert beschriebenen Sperrfreigabedrehstellung des Sperrbolzens 38 bzw. des Zylinderkerns 34 mit der Führungsnut 84 in der inneren Schließzylindergehäusehülse 74 fluchtet und somit eine Verschiebung des Zylinderkerns mit dem Sperrabschnitt 92 in Richtung der Längsachse A aus der Sperrstellung (Fig. 1) in die Freigabestellung (Fig. 2) und zurück ermöglicht.

Der Sperrabschnitt 92 ist im Bereich seines vom Zylinderkern 34 abgewandten Endes 96 mit dem Sperrbolzen 38 fest verbunden. In der in den Figuren 1 und 4 dargestellten Sperr- bzw. Sperrverriegelungsdrehstellung ist der Zylinderkern 34 ganz in das Schließzylindergehäuse 36 eingeschoben und ein freies Ende 98 des Sperrbolzens 38 ragt vollständig in die Sperrbolzenaufnahmeöffnung 40 in der Sperrbolzenaufnahme 46. Der Sperrbolzen 38 weist im Bereich seines freien Endes 98 zwei sich im wesentlichen quer zur Längsachse A erstreckende Vorsprünge 100, 102 auf, welche in der in Fig. 4 dargestellten Sperrverriegelungsdrehstellung in der Sperrbolzenaufnahmeöffnung 40 gebildete Ausnehmungen 104, 106 eingreifen.

Wie insbesondere in Fig. 5 zu erkennen ist, können die Ausnehmungen 104, 106 in einfacher Weise dadurch gebildet werden, daß in das Basisteil 54 der Sperrbolzenaufnahme 46 in parallele, im wesentlichen orthogonal zur Längsachse A verlaufende Bohrungen 108, 110 Stifte 112, 114 eingeführt werden, welche dann teilweise in die ansonsten kreisrunde Sperrbolzenaufnahmeöffnung ragen und somit die sich gegenüberliegenden Ausnehmungen 104, 106 in der Sperrbolzenaufnahmeöffnung 40 bilden. Wie in Fig. 5 ferner zu erkennen ist, sind die Stifte 112, 114 gegen ein Ausschieben aus den Bohrungen 108 und 110 durch den in der Umfangsvertiefung 52 angeordneten Bogenabschnitt 50 gesichert.

Durch Drehen des Zylinderkerns 34 und somit des Sperrabschnitts 92 und des Sperrbolzens 38 aus der in Fig. 4 dargestellten Sperrverriegelungsdrehstellung um die Längsachse A um einen Winkel von ca. 90° werden die Vorsprünge 100, 102 am freien Ende 98 des Sperrbolzens 38 aus den durch die Stifte 112, 114 in der Sperrbolzenaufnahmeöffnung 40 gebildeten Ausnehmungen 104, 106 herausbewegt. Der Sperrbolzen befindet sich dann in einer Sperrfreigabedrehstellung, in welcher abgeflachte End-Seitenflächen 116, 118 (siehe Fig. 3 und 5) im Bereich des freien Endes 98 des Sperrbolzens 38 im wesentlichen parallel zu den Stiften 112, 114 angeordnet sind und somit der Sperrbolzen 38 entlang der Längsachse A in Richtung eines Pfeils B mit seinem freien Ende 98 aus der Sperrbolzenaufnahmeöffnung 90 herausgezogen und in die Freigabestellung (siehe Fig. 2) in das Schließzylinderaufnahmegehäuse 30 zurückgezogen werden kann.

Wird nachfolgend das Scheibenbremsenschloß 10 an einer Scheibenbremse angebracht, so wird ein Umfangsabschnitt der Scheibenbremse in den Zwischenraum 48 eingeschoben und der Schließzylinder 34 mit im Schlüsselkanal 88 befindlichem Schlüssel aus der in Fig. 2 dargestellten Freigabestellung entgegen der Richtung des Pfeils B in die in Fig. 1 dargestellte Sperrstellung geschoben, wobei der Sperrbolzen 38 eine in der Scheibenbremse vorgesehene Bohrung durchsetzt. In der Sperrstellung stößt einerseits eine erste Radialschulter 120 des Sperrabschnitts 92 an einem radial nach innen gerichteten Umfangsflansch 122 in der Durchgangsöffnung 31 des Schließzylinderaufnahmegehäuses 30 an und andererseits stößt das freie Ende 98 des Sperrbolzens 38 am Boden 124 der Sperrbolzenaufnahmeöffnung 40 an. Ein axiales Weiterbewegen entgegen der Richtung des Pfeils B ist in der Sperrstellung nicht mehr möglich. Ferner ist in der Sperrstellung der Führungsvorsprung 80 an der äußeren Schließzylindergehäusehülse 72 vollständig aus der Führungsnut 94 des Sperrabschnitts 92 ausgezogen, so daß ein Drehen des Zylinderkerns 34 und somit des Sperrabschnitts 92 in der äußeren Schließzylindergehäusehülse 72 nunmehr möglich ist.

Durch Drehen des Schlüssels und somit des Zylinderkerns 34 wird dann die Führungsnut 94 bezüglich des Führungsvorsprungs 80 in Umfangsrichtung verdreht, so daß eine zweite Radialschulter 126 des Sperrabschnitts 92 nunmehr an dem radial nach innen vorspringenden Führungsvorsprung 80 anstößt und ein Verschieben des Sperrabschnitts 92, des Zylinderkerns 34, der inneren Schließzylindergehäusehülse 74 und des Sperrbolzens 38 in Richtung des Pfeils B verhindert ist. Ferner werden durch das Drehen des Zylinderkerns 34 die Vorsprünge 100, 102 in die durch die Stifte 112, 114 gebildeten Ausnehmungen 104, 106 bewegt und verriegeln somit das freie Ende 98 des Sperrbolzens 38 innerhalb der Sperrbolzenaufnahmeöffnung 40. Nach Abziehen des Schlüssels ist auch in dieser Drehstellung der Zylinderkern 34 gegen Drehung in dem Schließzylindergehäuse durch Stiftzuhaltungen 134 gesichert.

Aus der vorhergehenden Beschreibung geht hervor, daß in der Sperrverriegelungsdrehstellung einerseits der Sperrabschnitt 92 und somit der Sperrbolzen 38 durch die ersten und zweiten Radialschultern 120, 126 im Bereich der freien Enden 21, 25 der Endstege 24, 20 gegen Verschiebungen entlang der Längsachse A in beiden Richtungen gesichert ist. Andererseits ist durch die die Stifte 112, 114 hintergreifenden Vorsprünge 100, 102 und das am Boden 124 der Sperrbolzenaufnahmeöffnung 40 anstoßende freie Ende 98 des Sperrbolzens der Sperrbolzen im Bereich der freien Enden 42, 44 der Endstege 18, 22 gegen eine axiale Bewegung entlang der Längsachse A in beiden Richtungen gesichert. Die Sperrwirkung wird somit durch die Kopplung des Schließzylinderaufnahmegehäuses 30 mit der Sperrbolzenaufnahme 46 über den Sperrbolzen 38 und den Sperrabschnitt 92 erreicht. Der Schloßkörper 12 hat also beim erfindungsgemäßen Scheibenbremsenschloß 10 selbst keine Sperr- oder Sicherungswirkung, so daß dieser; wie in den Figuren dargestellt, durch zwei aus gehärtetem Drahtmaterial gebildete Bügel hergestellt werden kann. Der Schloßkörper 12 hat im wesentlichen die Aufgabe, das Schließzylinderaufnahmegehäuse 30 und die Sperrbolzenaufnahme 46 in einer relativen Stellung zu halten, welche jederzeit eine Betätigung des erfindungsgemäßen Scheibenbremsenschlosses zuläßt.

Wie insbesondere in den Figuren 3 und 4 zu erkennen ist, ist der Sperrbolzen 38 in einem mittleren Abschnitt 130 von einer Sicherungshülse 132 umgeben. Die Sicherungshülse 132 ist auf dem Sperrbolzen 38 um die Längsachse A drehbar und überbrückt in der Sperrstellung des Sperrbolzens 38 den im Bereich der freien Enden 42, 44, 21, 25 der Endstege 18, 22, 24, 26 gebildeten Freiraum 48 vollständig und ragt mit ihren axialen Enden in die Sperrbolzenaufnahmeöffnung 40 und die Durchgangsöffnung 31. Es wird somit verhindert, daß z. B. durch die Verwendung einer Zange der Sperrbolzen 38 bei an einer Scheibenbremse angebrachtem Scheibenbremsenschloß 10 aus seiner Sperrverriegelungsdrehstellung in die Sperrfreigabedrehstellung gedreht wird und dann die Sperrbolzenaufnahme 46 entgegen der Richtung des Pfeils B vom Sperrbolzen 58 abgezogen wird.

In Fig. 4 sind die Stiftzuhaltungen 134 nur schematisch dargestellt. Die Stiftzuhaltungen 134 dienen in Zusammenwirkung mit dem entsprechend geformten, in den Figuren nicht dargestellten Schlüssel dazu, bei in den Schlüsselkanal 88 eingeführtem Schlüssel eine Verdrehung des Zylinderkerns 34 innerhalb der inneren Schließzylindergehäusehülse 74 zu gestatten, bzw. eine derartige Drehung zu unterbinden, wenn der Schlüssel nicht in den Schlüsselkanal 88 eingeführt ist.

Wie in Fig. 3 ferner zu erkennen ist, erstreckt sich die Führungsnut 94 im Sperrabschnitt 92 nicht über dessen gesamte Länge, sondern endet in einer Endwand 136. Wird der Zylinderkern 34 in Richtung des Pfeils B aus der Sperrstellung (siehe Fig. 2) in die Freigabestellung bewegt, so stößt die Endwand 136 am Führungsvorsprung 80 an der äußeren Schließzylindergehäusehülse 74 an und verhindert eine weitere Bewegung des Sperrabschnitts 92 und somit des Zylinderkerns 34 und des Sperrbolzens 38 in Richtung des Pfeils B. Die Endwand 136 verhindert somit in Zusammenwirkung mit dem Führungsvorsprung 80, daß der Sperrabschnitt 92 und somit der Zylinderkern 34 und der Sperrbolzen 38 in Richtung des Pfeils B vollständig aus der Durchgangsöffnung 31 im Schließzylinderaufnahmegehäuse 30 herausbewegt wird.

Bei dem erfindungsgemäßen Scheibenbremsenschloß ist in der Sperrverriegelungsdrehstellung der Sperrbolzen sowohl am des Schließzylinderaufnahmegehäuses als auch am der Sperrbolzenaufnahme in beiden Richtungen der Längsachse A festgelegt, so daß der eigentliche Schloßkörper keine tragende bzw. sichernde Funktion hat. Dies ermöglicht die Verwendung leichterer, kleinerer und somit kostengünstigerer Schloßkörper, was einerseits die Herstellungskosten des erfindungsgemäßen Scheibenbremsenschlosses verringert und andererseits den Transport des erfindungsgemäßen Scheibenbremsenschlosses aufgrund des deutlich geringeren Gewichtes vereinfacht. Durch die beidseitige Verriegelung des Sperrbolzens ist beim erfindungsgemäßen Scheibenbremsenschloß im Vergleich zu dem aus dem Stand der Technik bekannten Scheibenbremsenschloß die durch das Scheibenbremsenschloß vorgesehene Sicherheit deutlich erhöht.

## Patentansprüche

1. Scheibenbremsenschloß (10), insbesondere zum Sperren einer Scheibenbremse eines Kraftrads, umfassend:
- einen im wesentlichen U-förmigen Schloßkörper (12) mit zwei Endstegen (18, 22, 20, 24) und einem die beiden Endstege verbindenden Verbindungssteg (26, 28),
- einen im Bereich eines freien Endes (21, 25) von einem ersten der Endstege (20, 24) angeordneten, entlang einer Längsachse (A) zwischen einer axialen Sperrstellung und einer axialen Freigabestellung in Richtung auf einen zweiten der Endstege (18, 22) zu und von dem zweiten Endsteg (18, 22) weg bewegbaren und in der Sperrstellung durch eine Schließvorrichtung (32) am ersten Endsteg (20, 24) gegen Axialbewegung in die Freigabestellung sperrbaren Sperrbolzen (38), und
- eine im Bereich eines freien Endes (42, 44) des zweiten Endstegs (18, 22) angeordnete Sperrbolzenaufnahmeöffnung (40),
wobei in der Sperrstellung des Sperrbolzens (38) ein freies Ende (98) des Sperrbolzens (38) in die Sperrbolzenaufnahmeöffnung (40) ragt,
wobei
am Sperrbolzen (38) im Bereich von dessen freiem Ende (98) Verriegelungsmittel (100, 102) vorgesehen sind und am zweiten Endsteg (18, 22) im Bereich der Sperrbolzenaufnahmeöffnung (40) Gegenverriegelungsmittel (104, 106) vorgesehen sind zum Verriegeln des Sperrbolzens (38) in der Sperrbolzenaufnahmeöffnung (40) in einer Sperrverriegelungsdrehstellung des Sperrbolzens (38) gegen Axialbewegung aus der Sperrbolzenaufnahmeöffnung (40) heraus,
dadurch gekennzeichnet, daß der Schloßkörper (12) zwei im wesentlichen parallel nebeneinander angeordnete Bügel aus gehärtetem Drahtmaterial mit jeweiligen Bügelschenkeln (18, 22, 20, 24) umfaßt, welche den ersten Endsteg (18, 22) und den zweiten Endsteg (20, 24) bilden.

2. Scheibenbremsenschloß nach Anspruch 1, dadurch gekennzeichnet, daß die den zweiten Endsteg (18, 22) bildenden Bügelschenkel (18, 22) an ihren freien Enden (42, 44) über einen die Gegenverriegelungsmittel (104, 106) umgreifenden Ringabschnitt (50) einstückig miteinander verbunden sind.

3. Scheibenbremsenschloß nach Anspruch 1 oder 2, dadurch gekennzeichnet,
daß die Verriegelungsmittel (100, 102) wenigstens einen am Sperrbolzen (38) im Bereich von dessen freiem Ende (98) vorgesehen, sich im wesentlichchen quer zur Längsachse (A) erstreckenden Vorsprung (100, 102) umfaßt, und daß die Gegenverriegelungsmittel (104, 106) wenigstens eine dem wenigstens einen Vorsprung (100, 102) zugeordnete Eingriffsausnehmung (104, 106) umfassen, in welche der wenigstens eine Vorsprung (100, 102) am Sperrbolzen (38) in der Sperrverriegelungsdrehstellung des Sperrbolzens (38) eingreift.

4. Scheibenbremsenschloß nach Anspruch 3,
dadurch gekennzeichnet,
daß im Bereich des freien Endes (42, 44) des zweiten Endstegs (18, 22) eine Sperrbolzenaufnahme (54) vorgesehen ist, in welcher die Sperrbolzenaufnahmeöffnung (40) geibldet ist, und daß die wenigstens eine Eingriffsausnehmung (104, 106) zwischen einem sich in der Sperbolzenaufnahme (54) im wesentlichen quer zur Längsachse (A) erstreckenden und mit einem Abschnitt in die Sperrbolzenaufnahmeöffnung (40) hineinreichenden Stift (112, 114) und einem Boden (124) der Sperrbolzenaufnahmeöffnung (40) gebildet ist.

5. Scheibenbremsenschloß nach Anspruch 3 oder 4,
dadurch gekennzeichnet,
daß der Sperrbolzen (38) am ersten Endsteg (20, 24) zwischen der Sperrverriegelungsdrehstellung und einer Sperrfreigabedrehstellung, in welcher der Vorsprung (100, 102) außer Eingriff mit der Eingriffsausnehmung (104, 106) ist, um die Längsachse (A) drehbar angeordnet ist, und daß der Sperrbolzen (38) in der Sperrverriegelungsdrehstellung durch die Schließvorrichtung (32) gegen Drehbewegung in die Sperrfreigabedrehstellung verriegelbar ist.

6. Scheibenbremsenschloß nach einem der Ansprüche 1 bis 5,
dadurch gekennzeichnet,
daß der Sperrbolzen (38) in einem mittleren Bereich (130) von einer am Sperrbolzen (38) um die Längsachse (A) drehbar angeordneten Sicherungshülse (132) umgeben ist, welche in der Sperrstellung des Sperrbolzens (38) einen zwischen den freien Enden (21, 25, 42, 44) der beiden Endstege (18, 22, 20, 24) gebildeten Freiraum (48) vollständig überbrückt.

7. Scheibenbremsenschloß nach einem der vorhergehenden Ansprüche,
dadurch gekennzeichnet,
daß die Schließvorrichtung (32) einen im Bereich des freien Endes (21, 25) des ersten Endstegs (20, 24) angeordneten Schließzylinder (32) mit einem Schließzylindergehäuse (36) und einem im Schließzylindergehäuse (36) um die Längsachse (A) drehbaren Zylinderkern (34) umfaßt, und daß der Sperrbolzen (38) mit seinem seinem freien Ende entgegengesetzten Ende mit dem Zylinderkern (34) zur gemeinsamen Drehung um die Achse (A) fest gekoppelt ist.

8. Scheibenbremsenschloß nach Anspruch 7,
dadurch gekennzeichnet,
daß daß Schließzylindergehäuse (36) eine in einem Schließzylinderaufnahmegehäuse (30) am freien Ende (21, 25) des ersten Endstegs (20, 24) fest angebrachte äußere Schließzylindergehäusehülse (72) umfaßt sowie eine in der äußeren Schließzylindergehäusehülse (72) in Richtung der Längsachse (A) verschiebbare und gegen Drehung um die Längsachse (A) gesicherte innere Schließzylindergehäusehülse (74), und daß der Zylinderkern (34) in der inneren Schließzylindergehäusehülse (74) um die Längsachse (A) drehbar, jedoch gegen Verschiebung entlang der Längsachse (A) bezüglich der inneren Schließzylindergehäusehülse (72) gesichert angeordnet ist.

9. Scheibenbremsenschloß nach Anspruch 8,
dadurch gekennzeichnet,
daß an einer Innenumfangsfläche (78) der äußeren Schließzylindergehäusehülse (72) wenigstens ein sich in Richtung der Längsachse (A) erstreckender Führungsvorsprung (80) vorgesehen ist,
daß in einer Außenumfangsfläche (82) der inneren Schließzylindergehäusehülse (74) wenigstens eine sich in Richtung der Längsachse (A) erstreckende, dem wenigstens einen Führungsvorsprung (80) zugeordnete Führungsnut vorgesehen ist, und
daß in einem sich in Richtung der Längsachse (A) an die innere Schließzylindergehäusehülse (74) anschließenden Sperrabschnitt (92) des Zylinderkerns (34) wenigstens eine in der Sperrfreigabedrehstellung des Sperrbolzens (38) mit der wenigstens einen Führungsnut (84) in der inneren Schließzylindergehäusehülse (74) axial fluchtende, sich in Richtung der Längsachse (A) erstreckende Führungsnut (94) vorgesehen ist.

10. Scheibenbremsenschloß nach Anspruch 9,
dadurch gekennzeichnet,
daß in der Sperrverriegelungsdrehstellung die Führungsnut (94) in der Außenumfangsfläche des Sperrabschnitts (92) bezüglich der Führungsnut (84) in der Außenumfangsfläche (82) der inneren Schließzylindergehäusehülse (74) und des Führungsvorsprungs (80) an der Innenumfangsfläche (78) der äußeren Schließzylindergehäusehülse (72) in Umfangsrichtung verdreht ist.

## Claims

1. A disk brake lock (10), in particular for blocking a motorcycle disk brake, comprising:
- a substantially U-shaped lock body (12) with two end pieces (18, 22, 20, 24) and a connecting piece (26, 28) connecting the two end pieces,
- a locking pin (38) arranged in the area of a free end (21, 25) of a first of the end pieces (20, 24), movable along a longitudinal axis (A) between an axial locking position and an axial release position towards a second of the end pieces (18, 22) and away from the second end piece (18, 22) and lockable in the locking position against axial movement into the release position by a locking device (32) on the first end piece (20, 24), and
- a locking pin receiving opening (40) arranged in the area of a free end (42, 44) of the second end piece (18, 22),
a free end (98) of the locking pin (38) projecting into the locking pin receiving opening (40) when the locking pin (38) is in the locking position,
securing means (100, 102) being provided on the locking pin (38) in the area of the free end (98) thereof and counter-securing means (104, 106) being provided on the second end piece (18, 22) in the area of the locking pin receiving opening (40) for securing the locking pin (38) in the locking pin receiving opening (40) against axial movement out of the locking pin receiving opening (40) when the locking pin (38) is in a lock-securing rotational position,
characterised in that the lock body (12) comprises two shackles of hardened wire material arranged substantially parallel next to one another, said shackles having respective shackle arms (18, 22, 20, 24) which form the first end piece (18, 22) and the second end piece (20, 24).

2. A disk brake lock according to claim 1, characterised in that the shackle arms (18, 22) forming the second end piece (18, 22) are connected together in one piece at their free ends (42, 44) by means of a ring portion (50) surrounding the counter-securing means (104, 106).

3. A disk brake lock according to claim 1 or claim 2,
characterised in that
the securing means (100, 102) comprises at least one projection (100, 102) provided on the locking pin (38) in the area of the free end (98) thereof and extending substantially perpendicularly to the longitudinal axis (A), and in that the counter-securing means (104, 106) comprise at least one engagement recess (104, 106) associated with the projection (100, 102), of which there is at least one, the at least one projection (100, 102) on the locking pin (38) engaging in the engagement recess (104, 106) when the locking pin (38) is in the lock-securing rotational position.

4. A disk brake lock according to claim 3,
characterised in that
a locking pin receptacle (54) is provided in the area of the free end (42, 44) of the second end piece (18, 22), in which receptacle (54) there is formed the locking pin receiving opening (40), and in that the at least one engagement recess (104, 106) is formed between a peg (112, 114), extending in the locking pin receptacle (54) substantially perpendicularly to the longitudinal axis (A) and reaching with a portion into the locking pin receiving opening (40), and a bottom (124) of the locking pin receiving opening (40).

5. A disk brake lock according to claim 3 or claim 4,
characterised in that
the locking pin (38) is arranged on the first end piece (20,24) so as to be rotatable about the longitudinal axis (A) between the lock-securing rotational position and a lock-release rotational position, in which the projection (100, 102) is out of engagement with the engagement recess (104, 106), and in that the locking pin (38) may be secured in the lock-securing rotational position against rotary motion into the lock-release rotational position by the locking device (32).

6. A disk brake lock according to one of claims 1 to 5,
characterised in that
the locking pin (38) is surrounded in a central area (130) by a security sleeve (132) arranged on the locking pin (38) so as to be rotatable about the longitudinal axis (A), said security sleeve (132) bridging completely a space (48) formed between the free ends (21, 25, 42, 44) of the two end pieces (18, 22, 20, 24) when the locking pin (38) is in the locking position.

7. A disk brake lock according to one of the preceding claims,
characterised in that
the locking device (32) comprises a cylinder lock (32) arranged in the area of the free end (21, 25) of the first end piece (20, 24), which cylinder lock comprises a cylinder lock housing (36) and a cylinder plug (34) rotatable in the cylinder lock housing (36) about the longitudinal axis (A), and in that the locking pin (38) is firmly coupled to the cylinder plug (34) by its opposite end from its free end for common rotation about the axis (A).

8. A disk brake lock according to claim 7,
characterised in that
the cylinder lock housing (36) comprises an outer cylinder lock housing sleeve (72) attached firmly, in a cylinder lock receiving housing (30) at the free end (21, 25) of the first end piece (20, 24) and an inner cylinder lock housing sleeve (74) displaceable in the outer cylinder lock housing sleeve (72) in the direction of the longitudinal axis (A) and secured against rotation about the longitudinal axis (A), and in that the cylinder plug (34) is arranged in the inner cylinder lock housing sleeve (74) so as to be rotatable about the longitudinal axis (A) but secured against displacement along the longitudinal axis (A) relative to the inner cylinder lock housing sleeve (72).

9. A disk brake lock according to claim 8,
characterised in that
at least one guide projection (80) extending in the direction of the longitudinal axis (A) is provided on an inner circumferential surface (78) of the outer cylinder lock housing sleeve (72),
in that at least one guide groove extending in the direction of the longitudinal axis (A) and associated with the at least one guide projection (80) is provided in an outer circumferential surface (82) of the inner cylinder lock housing sleeve (74), and
in that at least one guide groove (94) extending in the direction of the longitudinal axis (A) and aligned axially with the at least one guide groove (84) in the inner cylinder lock housing sleeve (74) when the locking pin (38) is in the lock-release rotational position is provided in a locking portion (92) of the cylinder plug (34) adjoining the inner cylinder lock housing sleeve (74) in the direction of the longitudinal axis (A).

10. A disk brake lock according to claim 9,
characterised in that,
in the lock-securing rotational position, the guide groove (94) in the outer circumferential surface of the locking portion (92) is rotated in the circumferential direction relative to the guide groove (84) in the outer circumferential surface (82) of the inner cylinder lock housing sleeve (74) and to the guide projection (80) on the inner circumferential surface (78) of the outer cylinder lock housing sleeve (72).

## Revendications

1. Serrure de frein à disque (10), notamment pour bloquer un frein à disque d'un motocycle, comportant:
- un un corps de serrure (12) sensiblement en U avec deux branches terminales (18, 22, 20, 24) et une traverse de liaison (26, 28) reliant les deux branches terminales,
- une cheville de blocage (38) qui est disposée dans la zone d'une extrémité libre (21, 25) d'une première des branches terminales (20, 24), qui est déplaçable le long d'un axe longitudinal (A) entre une position axiale de blocage et une position axiale de déblocage, vers une deuxième des branches terminales (18,22) et à partir de la deuxième branche terminale (18,22), et qui peut être bloquée dans la position de blocage par un dispositif de fermeture (32) sur la première branche terminale (20,24), contre un mouvement axial dans la position de déblocage, et
- une ouverture (40) formant logement pour la cheville de blocage, disposée dans la zone d'une extrémité libre (42, 44) de la deuxième branche terminale (18, 22),
dans la position de blocage de la cheville de blocage (38), une extrémité libre (98) de la cheville de blocage (38) pénétrant dans l'ouverture (40) formant logement pour la cheville de blocage,
dans laquelle
des moyens de verrouillage (100, 102) sont prévus sur la cheville de blocage (38), dans la zone de son extrémité libre (98), et dans laquelle sur la deuxième branche terminale (18, 22), dans la zone de l'ouverture (40) formant logement pour la cheville de blocage, sont prévus des contre-moyens de verrouillage (104, 106) pour le verrouillage de la cheville de blocage (38) dans l'ouverture (40) formant logement pour la cheville de blocage, dans une position tournée de verrouillage de blocage de la cheville de blocage (38), contre un mouvement axial vers l'extérieur de l'ouverture (40) formant logement pour la cheville de blocage,
caractérisée en ce que le corps de serrure (12) comprend deux étriers, juxtaposés sensiblement parallèlement, en fil métallique trempé avec des branches d'étrier (18, 22, 20, 24) respectives qui forment la première branche terminale (18, 22) et la deuxième branche terminale (20, 24).

2. Serrure de frein à disque selon la revendication 1, caractérisée en ce que les branches d'étrier (18, 22), qui forment la deuxième branche terminale (18, 22), sont reliées entre elles d'une seule pièce, à leurs extrémités libres (42, 44), par un segment annulaire (50) qui entoure les contre-moyens de verrouillage (104, 106).

3. Serrure de frein à disque selon la revendication 1 ou 2,
caractérisée en ce que les moyens de verrouillage (100, 102) comprennent au moins une saillie (100, 102) prévue sur la cheville de blocage (38), dans la zone de son extrémité libre (98), et qui s'étend sensiblement perpendiculairement à l'axe longitudinal (A), et en ce que les contre-moyens de verrouillage (104, 106) comprennent au moins un évidement d'engagement (104, 105) associé à la ou aux saillie(s) (100, 102), évidement dans lequel s'engage(nt) la ou les saillie(s) (100, 102) sur la cheville de blocage (38), dans la position tournée de verrouillage de blocage de la cheville de blocage (38).

4. Serrure de frein à disque selon la revendication 3,
caractérisée en ce que dans la zone de l'extrémité libre (42, 43) de la deuxième branche terminale (18, 22), il est prévu un logement (54) pour la cheville de blocage dans lequel est formée l'ouverture (40) formant logement pour la cheville de blocage, et en ce qu'il est formé le ou les évidement(s) d'engagement (104, 106) entre une goupille (112, 104) qui s'étend sensiblement perpendiculairement à l'axe longitudinal (A) dans le logement (54) de la cheville de blocage et dont une partie s'engage dans l'ouverture (40) formant logement pour la cheville de blocage, et un fond (124) de l'ouverture (40) formant logement pour la cheville de blocage.

5. Serrure de frein à disque selon la revendication 3 ou 4,
caractérisée en ce que la cheville de blocage (38) est disposée sur la première branche terminale (20, 24), de manière à pouvoir tourner autour de l'axe longitudinal (A), entre la position tournée de verrouillage de blocage et une position tournée de déblocage, dans laquelle la saillie (100, 102) est dégagée de l'évidement d'engagement (104, 106), et en ce que la cheville de blocage (38) peut être verrouillée dans la position tournée de verrouillage de blocage par le dispositif de fermeture (32), contre un mouvement de rotation dans la position tournée de déblocage.

6. Serrure de frein à disque selon l'une des revendications 1 à 5,
caractérisée en ce que la cheville de blocage (38) est entourée, dans une zone centrale (130), par une douille de sûreté (132), disposée sur la cheville de blocage (38), de manière à pouvoir tourner autour de l'axe longitudinal (A), laquelle douille de sûreté recouvre totalement, dans la position de blocage de la cheville de blocage (38), un espace libre (48) formé entre les extrémités libres (21, 25, 42, 43) des deux branches terminales (18, 22, 20, 24).

7. Serrure de frein à disque selon l'une des revendications précédentes,
caractérisée en ce que le dispositif de fermeture (32) comprend un cylindre de fermeture (32), disposé dans la zone de l'extrémité libre (21, 25) de la première branche terminale (20, 24), avec un boîtier (36) et un noyau de cylindre (34) qui peut tourner autour de l'axe longitudinal (A) dans le boîtier (36) du cylindre de fermeture, et en ce que la cheville de blocage (38) est fixement couplée, par son extrémité, opposée à son extrémité libre, avec le noyau de cylindre (34), pour leur rotation commune autour de l'axe (A).

8. Serrure de frein à disque selon la revendication 7,
caractérisée en ce que le boîtier (36) du cylindre de fermeture comprend une douille extérieure (72), fixée dans un boîtier (30) destiné à recevoir le cylindre de fermeture, à l'extrémité libre (21, 25) de la première branche terminale (20, 24), ainsi qu'une douille intérieure (74) qui peut coulisser dans la douille extérieure (72) du boîtier du cylindre de fermeture, dans la direction de l'axe longitudinal (A), et qui est bloquée contre une rotation autour de l'axe longitudinal (A), et en ce que le noyau de cylindre (34) peut tourner dans la douille intérieure (74) du boîtier du cylindre de fermeture, autour de l'axe longitudinal (A), mais est bloqué contre un coulissement le long de l'axe longitudinal (A), par rapport à la douille intérieure (72) du boîtier du cylindre de fermeture.

9. Serrure de frein à disque selon la revendication 8,
caractérisée en ce que sur une surface périphérique intérieure (78) de la douille extérieure (72) du boîtier du cylindre de fermeture, il est prévu au moins une saillie de guidage (80), qui s'étend dans la direction de l'axe longitudinal (A),
en ce que dans une surface périphérique extérieure (82) de la douille intérieure (74) du boîtier du cylindre de fermeture, il est prévu au moins une rainure de guidage qui s'étend dans la direction de l'axe longitudinal (A) et qui est associée à la ou aux saillie(s) de guidage (80), et
en ce que dans un segment de blocage (92) du noyau de cylindre (34), qui fait suite, dans la direction de l'axe longitudinal (A), à la douille intérieure (74) du boîtier du cylindre de fermeture, il est prévu au moins une rainure de guidage (94) qui est alignée axialement, dans la position tournée de déblocage de la cheville de blocage (38), avec la ou les rainures de guidage (84), dans la douille intérieure (74) du boîtier du cylindre de fermeture, et qui s'étend dans la direction de l'axe longitudinal (A).

10. Serrure de frein à disque selon la revendication 9,
caractérisée en ce que dans la position tournée de verrouillage de blocage, la rainure de guidage (94) est tournée dans la direction périphérique, dans la surface périphérique extérieure du segment de blocage (92), par rapport à la rainure de guidage (84) de la surface périphérique extérieure (82) de la douille intérieure (74) du cylindre de fermeture et de la saillie de guidage (80), de la surface périphérique intérieure (78) de la douille extérieure (72) du boîtier du cylindre de fermeture.
